# EUROPEAN PATENT SPECIFICATION

(11) **EP 4 643 405 B1**
(45) Date of publication and mention of the grant of the patent: **25.11.2026**
(21) Application number: 23848569.2
(22) Date of filing: 28.12.2023
(51) Int. Cl.: H01M 10/06, H01M 10/42, H01M 10/48, H01M 50/204, B23K 31/00, H01M 50/298, B23K 9/167, B23K 9/23, B23K 31/02

(54) **SENSING CONNECTION METHOD**
MESSVERBINDUNGSVERFAHREN
PROCÉDÉ DE CONNEXION DE DÉTECTION

(30) Priority: 28.12.2022 US 202263477410 P
(43) Date of publication of application: 05.11.2025
(73) Proprietor: CPS Technology Holdings LLC, New York, New York 10281 (US)
(72) Inventor: TROXEL, Jeffrey L., Menomonee Falls, Wisconsin 53051 (US); BRANKOV, Branislav, Greenfield, Wisconsin 53221 (US); FUERBRINGER, Luke William, Milwaukee, Wisconsin 53228 (US)
(74) Representative: Meissner Bolte Partnerschaft mbB
(86) International application number: PCT/US2023/086187
(87) International publication number: WO 2024/145447

(56) References cited:
- JP-A- 2002 270 151
- JP-A- 2003 308 822

## Description

### TECHNICAL FIELD

This disclosure relates to batteries and in particular to manufacturing and/or assembly of a smart battery to facilitate battery performance/failure monitoring.

### BACKGROUND

As battery technology evolves, the demand for improved power sources such as energy storage modules for vehicles continues to grow. Existing battery systems, for example lead acid battery systems, typically offer limited access to performance and failure monitoring, and have complex venting arrangements. More specifically, existing lead acid battery systems may not be capable of providing one or more battery parameters (e.g., usable to determine performance and/or predict/monitor failure) of one or more battery cells of the lead acid battery system. In other words, it is difficult for existing lead acid battery systems to provide information about vital components, such as the state of health of the individual battery cells. Accordingly, the state of health of battery cells cannot be monitored and/or determined, thus hindering the ability to predict upcoming battery failure or the onset of failure. JP 2002 270151 A relates to a lead-acid battery designed to enable accurate voltage measurement of its positive pole. A tubular bushing fixed in the cover incorporates an upward-protruding auxiliary terminal; after the cylindrical pole (with an embedded brass core) is fitted into the bushing, the upper parts of the bushing and pole are welded, and the remaining structure (except the auxiliary terminal and brass core) is encapsulated in synthetic resin. Crucially, the auxiliary terminal is positioned lower than the brass core, allowing a crocodile clip to contact it without interfering with the copper bar connection, thereby reducing contact-resistance variations caused by oxidation and ensuring reliable voltage and internal-resistance readings even after long-term use.

### SUMMARY

Some embodiments advantageously provide a connection (and/or method of making a connection) for sensing a parameter associated with a battery cell and/or a battery. In some embodiments, the method of making a connection is a sensing connection method.

According to one aspect, a lead assembly connection for coupling a post connector of a lead assembly is described. The lead assembly connection comprises a first weld comprising a bushing and a post welded to the bushing. The lead assembly connection further comprises a second weld comprising the first weld and the post connector. At least a portion of the first weld is distributed around and over the post connector to electrically couple the post connector to the bushing and the post.

According to another aspect, a battery is described. The battery comprises a case housing a battery cell, where the battery cell includes a post electrically coupled to the battery cell. Further, the battery comprises a cover sealed to the case and including a bushing coupled to the cover. The cover sealed to the case defines an internal case space. The post is inserted through the bushing. At least a portion of the post protrudes from the bushing and is external to the internal case space. The battery further comprises a first weld, a lead assembly, and a second weld. The first weld comprises the bushing and the post welded to the bushing. The lead assembly comprises a post connector. The second weld comprises the first weld welded to the post connector. At least a portion of the first weld is distributed around and over the post connector to electrically couple the post connector to the bushing, the post, and the battery cell. One or more of the first and second welds seal the post and the bushing to the cover. The second weld is external to the internal case space.

According to one aspect, a lead connection for coupling a first end of a lead to a post and a bushing of a battery is described. The lead connection includes a first weld that includes the bushing and the post welded to the bushing. The lead connection also includes a second weld. The second weld includes the first weld and the first end of the lead. At least a portion of the first weld is distributed around and over the first end of the lead to electrically couple first end of the lead to the bushing and the post.

In some embodiments, the first weld is a weld button that extends from the post.

In some other embodiments, the weld button includes a first portion and a second portion contiguous to the first portion, the second portion being a curved structure.

In some embodiments, the first end of the lead is positioned between the first portion and the second portion and is physically coupled to the post.

In some other embodiments, the first weld has a third portion that covers and is in physical contact with the post.

In some embodiments, the first weld and second weld are integrated into a unitary construction.

In some other embodiments, the first end of the lead is one of a ring and a post connector.

In some embodiments, the first weld and the second weld are electrically connectable to a battery cell via the post, and the lead is connectable to a battery management system (BMS) configurable to measure a battery parameter via the lead connection.

According to another aspect, a battery is described. The battery includes a case, a plurality of posts, a cover, and a plurality of leads. The case houses a plurality of battery cells. Each post of the plurality of posts is electrically coupled to at least one battery cell of the plurality of battery cells. The cover is sealed to the case and includes a plurality of bushings coupled to the cover. Each post of the plurality of posts is inserted through a corresponding bushing. The plurality of leads includes a plurality of lead connections. Each lead includes a first end and a second end opposite the first end. Each lead connection of the plurality of lead connections includes a first weld and a second weld. The first weld includes one bushing of the plurality of bushings and one post of the plurality of posts. The one post is welded to the one bushing. The second weld includes the first weld and the first end of the lead. At least a portion of the first weld is distributed around and over the first end of the lead to electrically couple first end of the lead to the bushing and the post.

In some embodiments, the cover sealed to the case defines an internal case space housing the plurality of battery cells, the lead connection being external to the internal case space.

In some other embodiments, the battery further includes a battery management system (BMS) configured to measure a battery parameter via each lead connection of the plurality of lead connections. The BMS is electrically coupled to the second end of each lead.

In some embodiments, the first weld is a weld button that extends away from the cover.

In some other embodiments, the weld button includes a first portion and a second portion contiguous to the first portion. The first portion is contiguous to the cover, and the second portion is a curved structure.

In some embodiments, the first weld has a third portion that covers and is in physical contact with the one post.

In some other embodiments, the first weld and the second weld are integrated into a single unitary construction.

In some embodiments, the first end of each lead is one of a ring and a post connector.

According to one aspect, a method for coupling a first end of a lead to a post and a bushing of a battery is described. The battery includes a cover. The bushing is coupled to the cover. The method includes inserting the post through the bushing, where at least a portion of the post protrudes from the bushing and the cover, and performing a first weld by welding the post to the bushing. The welding is applied at least to the portion of the post that protrudes from the bushing. The method also includes performing a second weld by welding the first weld to the first end of the lead. At least another portion of the first weld is distributed around and over the first end of the lead.

In some embodiments, the performing the first weld includes forming a weld button that extends away from the cover.

In some other embodiments, the weld button includes a first portion and a second portion contiguous to the first portion. The second portion is a curved structure.

In some embodiments, the method further includes positioning the first end of the lead between the first portion and the second portion and coupling the first end to the post and the bushing.

In some other embodiments, the first weld has a third portion that covers the post.

In some embodiments, the method further includes integrating the first weld and the second weld into a single unitary construction.

In some other embodiments, the first end of the lead is one of a ring and a post connector.

In some embodiments, the battery further includes a battery management system (BMS) configurable to measure a battery parameter via the first end of the lead, the first weld, and the second weld. The lead further includes a second end opposite to the first end, and the method further includes coupling the second end of the lead to the BMS.

### BRIEF DESCRIPTION OF THE DRAWINGS

A more complete understanding of embodiments described herein, and the attendant advantages and features thereof, will be more readily understood by reference to the following detailed description when considered in conjunction with the accompanying drawings wherein:
FIG. 1 shows an example battery and one or more components of the example battery according to the principles of the present disclosure;
FIG. 2 shows an example battery (e.g., exploded view) and one or more components of the example battery according to the principles of the present disclosure;
FIG. 3 shows an example case and cover comprising bushings according to the principles of the present disclosure;
FIG. 4 shows example first cover coupled to case according to the principles of the present disclosure;
FIG. 5 shows an example post and bushing according to the principles of the present disclosure;
FIG. 6 shows another example post and bushing according to the principles of the present disclosure;
FIG. 7 shows example welds according to the principles of the present disclosure;
FIG. 8 shows a view of an example weld of FIG. 7 according to the principles of the present disclosure;
FIG. 9 shows a cross-section view of the example weld of FIG. 8 according to the principles of the present disclosure;
FIG. 10 shows a view of an example weld shown in FIG. 7 according to the principles of the present disclosure;
FIG. 11 shows a cross-section view of the example weld of FIG. 10 according to the principles of the present disclosure;
FIG. 12 shows an example of a plurality of leads according to the principles of the present disclosure;
FIG. 13 show an example lead assembly according to the principles of the present disclosure;
FIG. 14 shows another example plurality of leads according to the principles of the present disclosure;
FIG. 15 shows another example of lead assembly according to the principles of the present disclosure;
FIG. 16 shows an example lead assembly and welds according to the principles of the present disclosure;
FIG. 17 shows an example weld according to the principles of the present disclosure;
FIG. 18 shows another example weld according to the principles of the present disclosure;
FIG. 19 shows an example weld according to the principles of the present disclosure;
FIG. 20 shows another example weld according to the principles of the present disclosure;
FIG. 21 shows a flowchart of an example lead connection process according to the principles of the present disclosure; and
FIG. 22 shows a flowchart of an example lead connection process according to the principles of the present disclosure.

### DESCRIPTION

As battery technology evolves, there is a need to provide improved power sources, and more efficient and cost-effective methods for manufacturing and/or assembling such power sources as compared to conventional systems and methods.

Accordingly, embodiments described and shown herein provide a method of manufacturing and/or assembling a smart battery (e.g., a sense connection method, lead and/or lead assembly connection method, a method for connecting bushings, posts, and leads of a lead frame).

In some embodiments, the term "smart battery" may be used and may refer to a battery having, for example, lead, lithium or sodium chemistries, that are enabled by electronics physically attached to the battery for monitoring battery functional parameters, such as but not limited to state of charge, state of health and/or trends thereof, or communicating battery conditions internally within or externally from the battery environment. The electronics may be generally referred to as connected electronics and may include a battery management system or any other electronic component. Further, electronics may utilize wired or wireless transmission devices or communication interfaces configured for communication of data and/or information, such as applicable battery information and/or derivatives of the battery information.

In some other embodiments, the term connect or connection may refer to physically and/or electrically connecting (e.g., coupling) one or more components. In some embodiments, the term "coupling" is used and may refer to a two or more components of a battery that are coupled to each other. A coupling may also include two or more components that are welded or coupled using any other coupling mechanism or process. In some other embodiments, a coupling may be referred to as a weld, such as the formed component that results from welding two or more components together. A weld may comprise at least a first portion and a second portion contiguous to the first portion. The first portion may be a top portion and the second portion may be side portion. The first portion and/or the second portion may be referred to as a weld button and may extend another component such as a battery cover and be accessible and/or exposed such as to receive other components to which the weld button may be also coupled (welded).

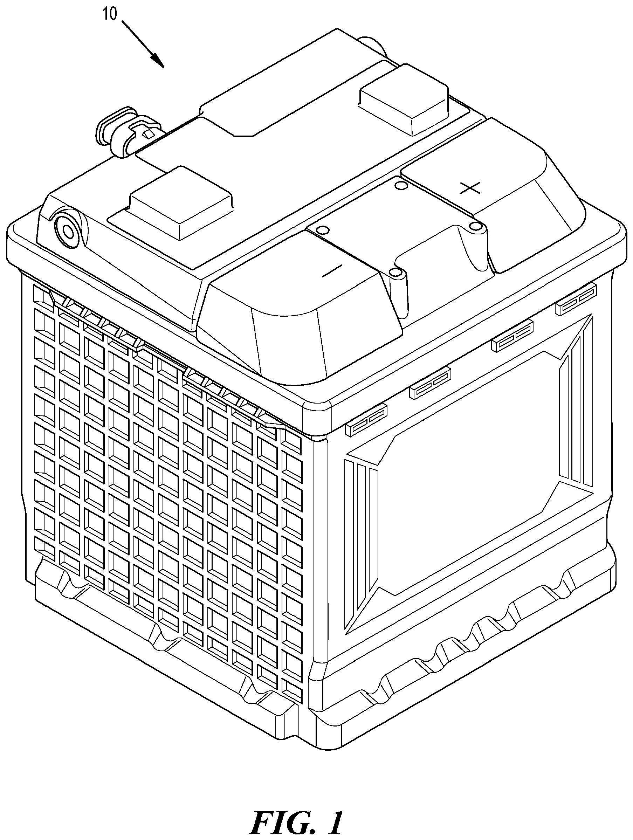

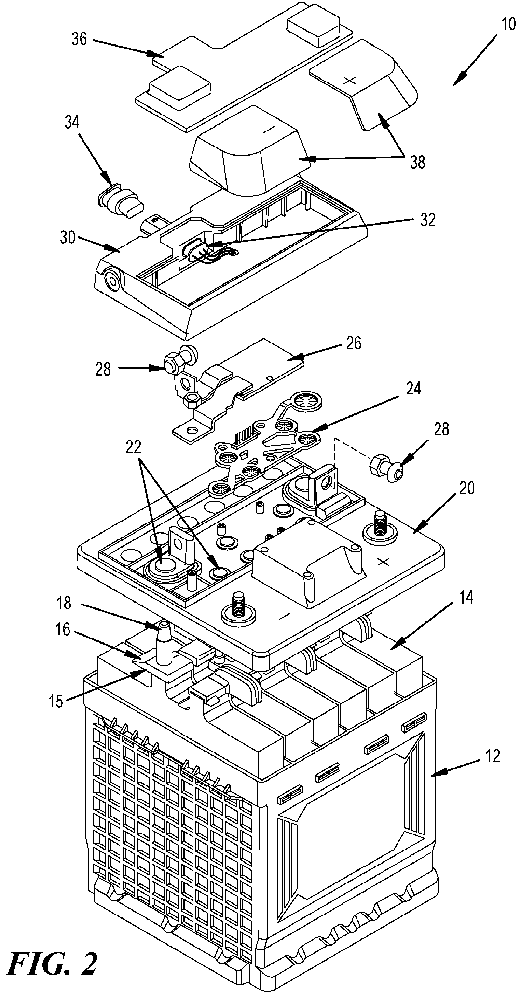

FIGS. 1 and 2 show an example battery (e.g., a lead acid battery having a smart Absorbent Glass Mat (AGM) battery assembly) and one or more components of the example battery. Battery 10 may include at least one of the following: a case 12 (which may be made of from a resin or any other suitable material), one or more battery cells 14, a post assembly 15 (e.g., Cast-On-Strap (COS) post assembly), one or more straps 16, one or more posts 18 (e.g., a terminal post, a mini-post), a first cover 20, one or more bushings 22 (e.g., a U1 bushing, a mini-bushing), a lead assembly 24 (e.g., a lead frame), a battery management system (BMS) 26 (e.g., including a board), one or more fasteners 28, a second cover 30, a wiring harness 32, a vehicle connector 34, a third cover 36, and one or more terminal caps 38. Post assembly 15 may include the one or more straps 16 coupled to the one or more posts 18. In some embodiments, case 12 may be referred to as a housing.

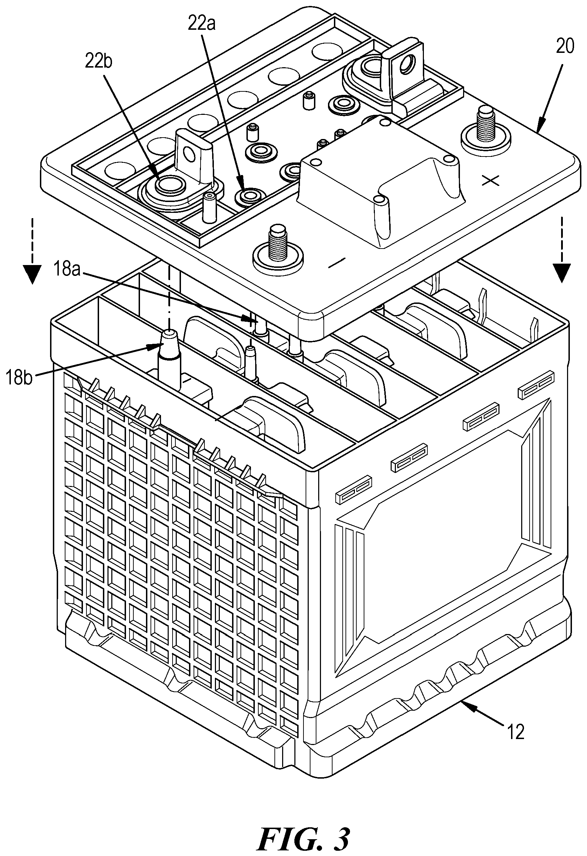

FIG. 3 shows an example case 12 and first cover 20 comprising bushings 22 according to the principles of the present disclosure. More specifically, battery cells 14 (shown in FIG. 2) have been inserted in case 12. The battery cells 14 are connected to posts 18 (via post assembly 15 shown in FIG. 2). The first cover 20 comprises one or more bushings 22 such as bushing 22a (e.g., a mini-bushing) and bushing 22b. Bushing 22a is aligned with post 18a, and bushing 22b is aligned with post 18b. Other bushings 22 may be aligned with other posts 18. The first cover 20 is then coupled (and/or sealed) to case 12.

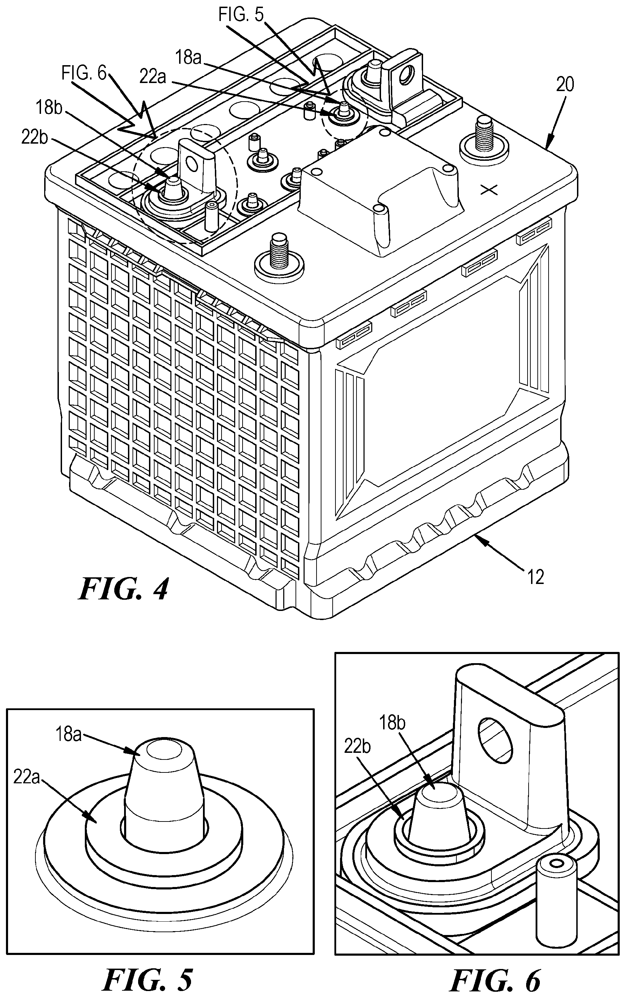

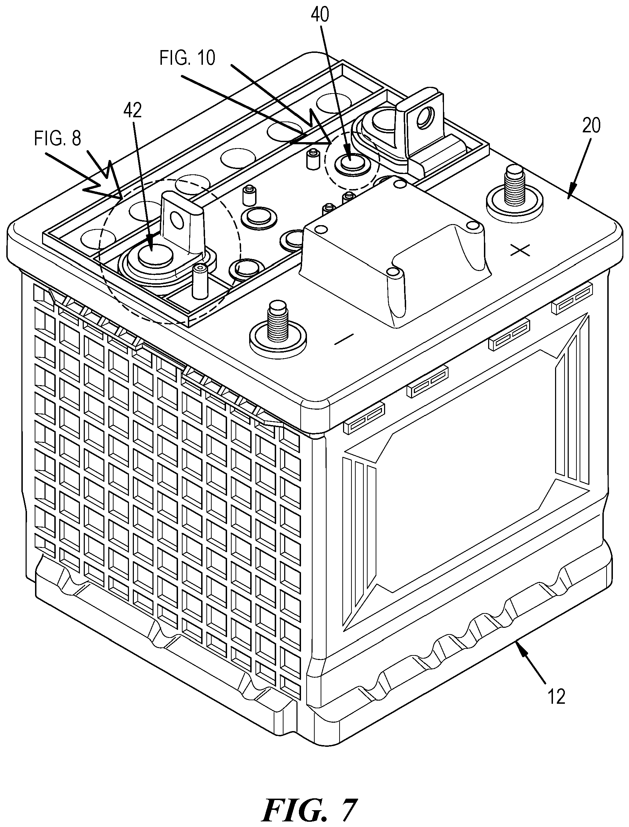

FIG. 4 shows example first cover 20 coupled to case 12. More specifically, first cover 20 is shown coupled to case 12, where posts 18 may be in contact with their respective bushing 22, and at least a portion of post 18 protrudes from the respective bushing 22 as shown in FIGS. 5 and 6. On FIG. 5, post 18a has been inserted through bushing 22a, where post 18a may be in direct contact with bushing 22a, and a portion of post 18a protrudes from bushing 22a. On FIG. 6, post 18b has been inserted through bushing 22b, where post 18b may be in direct contact with bushing 22b, and a portion of post 18b protrudes from bushing 22b. FIG. 7 shows example welds according to the principles of the present disclosure. The posts 18 and bushing 22 may be welded to form welds 40, 42. More specifically, post 18a and bushing 22a shown in FIG. 5 are welded to form weld 40. Similarly, post 18b and bushing 22b shown in FIG. 6 are welded to form weld 42. In some embodiments, weld 40 is associated with a battery cell 14, and weld 42 is associated with a terminal of the battery 10. Once welds 40, 42 are completed, the posts 18 and bushings 22 are welded to each other. In addition, after welding has been completed, at least a portion of post 18 is integrated with bushing 22. In some embodiments, once welds 40 are completed, the welds 40, 42 are sealed to first cover 20, e.g., such that an internal space (e.g., including battery cells 14) defined by the first cover 20 and case 12 is sealed. In some other embodiments, welding post 18 and bushing 22 forms a weld 40, 42 of single unitary construction that is sealed to first cover 20. Any one of welds 40, 42 may be a first weld or a weld button.

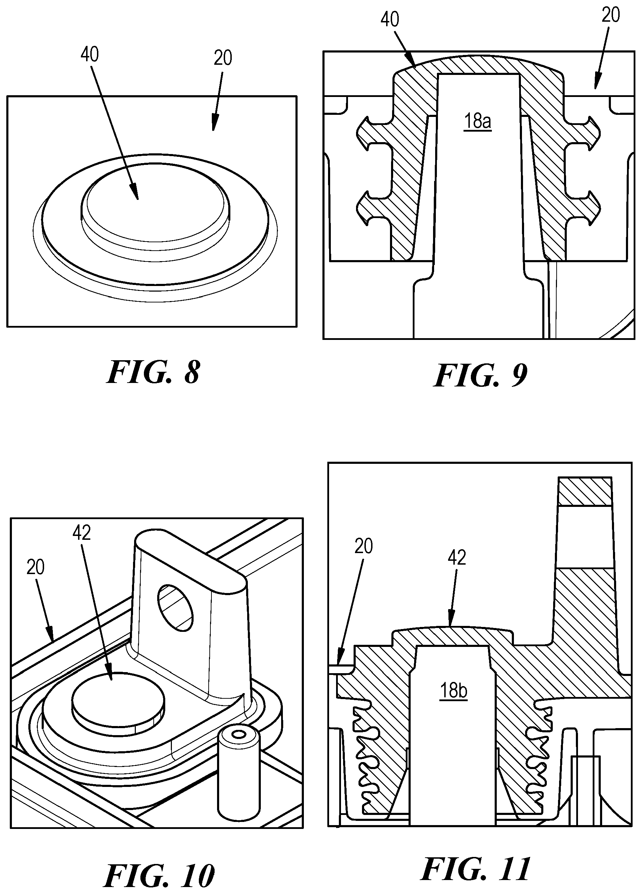

FIG. 8 shows a view of an example weld 40 shown in FIG. 7. The weld 40 extends from first cover 20. That is, a portion of weld 40 extends from first cover 20 and is accessible and/or exposed such as to receive other components to which the weld 40 may be also coupled (welded). FIG. 9 shows a cross-section view of the example weld 40 of FIG. 8. Weld 40 is in physical contact with and/or coupled to the first cover 20. Further, weld 40 comprises at least a portion of post 18a, which is electrically coupled to one or more battery cells 14.

FIG. 10 shows a view of an example weld 42 shown in FIG. 7. The weld 42 extends from first cover 20. That is, a portion of weld 42 extends from the first cover 20 and is accessible and/or exposed such as to receive other components to which the weld 42 may be also coupled (welded). FIG. 11 shows a cross-section view of the example weld 42 of FIG. 10. Weld 42 is in physical contact with and/or coupled to the first cover 20. Further, weld 42 comprises at least a portion of post 18b, which is electrically coupled to one or mor battery cells 14 and/or a terminal.

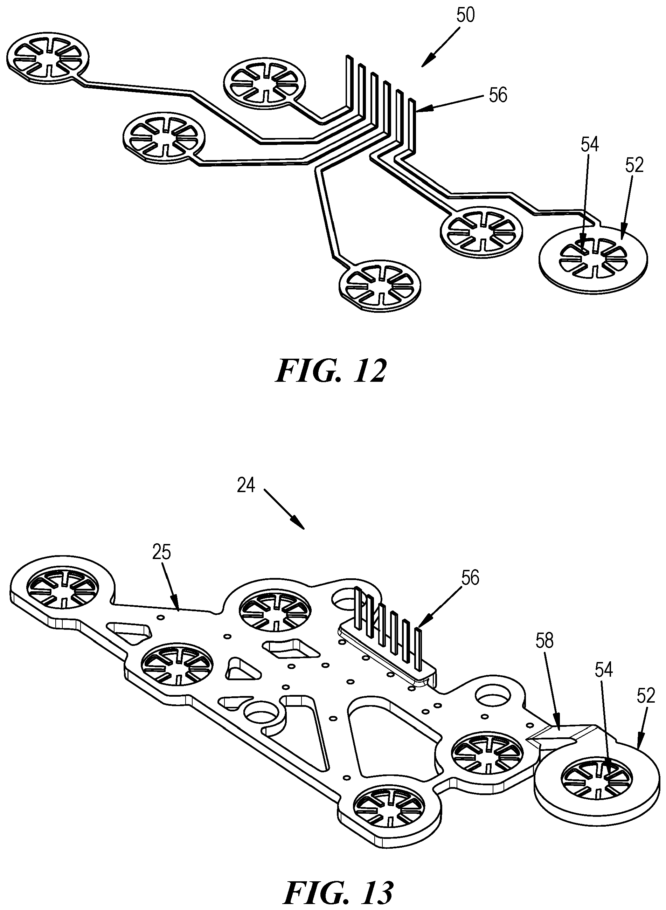

FIG. 12 shows an example of a plurality of leads 50 (e.g., six leads). FIG. 13 shows lead assembly 24 (e.g., including the plurality of leads 50). Referring to FIGS. 12 and 13, each lead 50 may include one or more of each of the following: a first end 52 and a second end 56 opposite to the first end 52. The first end 52 may be a lead ring and include a post connector 54 (e.g., a spoke) coupled to the first end 52. The second end 56 may be configured as lead BMS connector (e.g., pin, space, etc.). The first end 52 (e.g., ring which may include post connector 54) may be arranged to physically and/or electrically connect lead 50 to a post 18 and/or bushing 22. The second end 56 (e.g., BMS connector) may be arranged to extend from another portion of the lead 50 and/or bend to a predetermined angle and/or physically and/or electrically connect to BMS 26 (and/or any of its components). Lead 50 may be made of any material including conductive materials, e.g., to conduct electricity and/or propagate signals. In a nonlimiting example, lead 50 may refer to a stamped frame and/or be made of at least one of copper, brass, steel, aluminum, titanium, platinum, etc. Further, lead 50 may include a coating and/or a finish such as a finish using copper, nickel, tin, palladium, silver, gold, zinc, etc. Lead 50 may be used by BMS 26 to measure/determine one or more parameters associated with a post 18 and/or corresponding battery cell 14. Parameters may include, without limitation, voltage, current, temperature, pressure, etc., and may be associated with any component of battery 10, e.g., post 18, battery cell 14, etc. Lead(s) 50 (e.g., stamped leads) may be comprised in a lead assembly 24, e.g., an over molded assembly). The lead assembly 24 may comprise lead frame 25. Further, lead assembly 24 may comprise one or more openings arranged for coupling lead assembly 24 to first cover 20.

Any portion of each lead 50 may be hinged and/or adapted to be flexible and/or adjustable, e.g., to connect lead 50 to a post 18 that may be in a different plane than a plane corresponding to another portion of lead assembly 24. A terminal of the battery 10 and/or corresponding post 18 may be located on a different plane than a plane where other posts 18 (e.g., mini-posts) are located. In other words, it is contemplated that terminals and posts 18 need not be co-planar with respect to the top surface of the battery case 12. In a nonlimiting example, lead assembly 24 includes arm 58 which may be arranged to adjust the location of a portion of lead assembly 24, e.g., corresponding to a predetermined post 18 such as a portion that includes the first end 52 (e.g., a ring) and/or post connector 54 for a positive terminal post that is not coplanar with others of the first ends 52 (e.g., rings) in the lead assembly 24. In some embodiments, arm 58 can be pivotable to allow for adjustment. By having arm 58 adjustable, lead assembly 24 may be arranged to fit one or more posts/terminals having different locations. Further, first end 52 (which may include post connector 54) may be sized based on a post type and/or any other parameter. In a nonlimiting example, first end 52 and/or post connector 54 may be made thicker and/or have a greater diameter than other first ends 52 and/or post connectors 54 of lead assembly 24, e.g., to fit a size and type of a post of a positive terminal having a greater size and current rating. In a nonlimiting example, first end 52 and/or post connector 54 may be made thinner and/or have a smaller diameter than other first ends 52 and/or post connectors 54 of lead assembly 24, e.g., to fit a size and type of a mini-post used to receive/transmit/measure a battery parameter. Lead assembly 24 can be made by molding a polymer (e.g., to make lead frame 25) over the leads 50 to thereby provide structure for the leads 50. Lead assembly 24 can be rigid or flexible or a combination thereof, depending on the intended design.

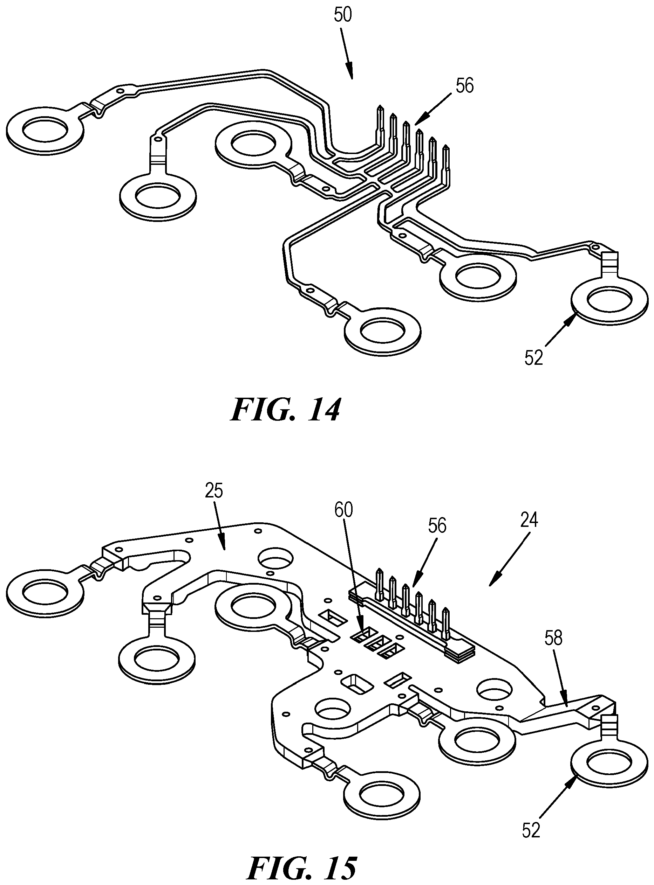

FIG. 14 shows another example embodiment of a plurality of leads 50, e.g., first ends 52 without post connectors 54. In this nonlimiting example, first end 52 is arranged to receive and contact a portion of any of welds 40, 42. Further, first end 52 may be welded to any of welds 40, 42. FIG. 15 shows another example of lead assembly 24, including lead frame 25, first end 52, leads 50, arm 58, and opening 60. Opening 60 may be arranged to provide access to a portion of the plurality of leads 50 which interconnects leads 50. Opening 60 may be used to break the interconnection between leads, thereby electrically isolating each lead 50 from the remaining leads 50.

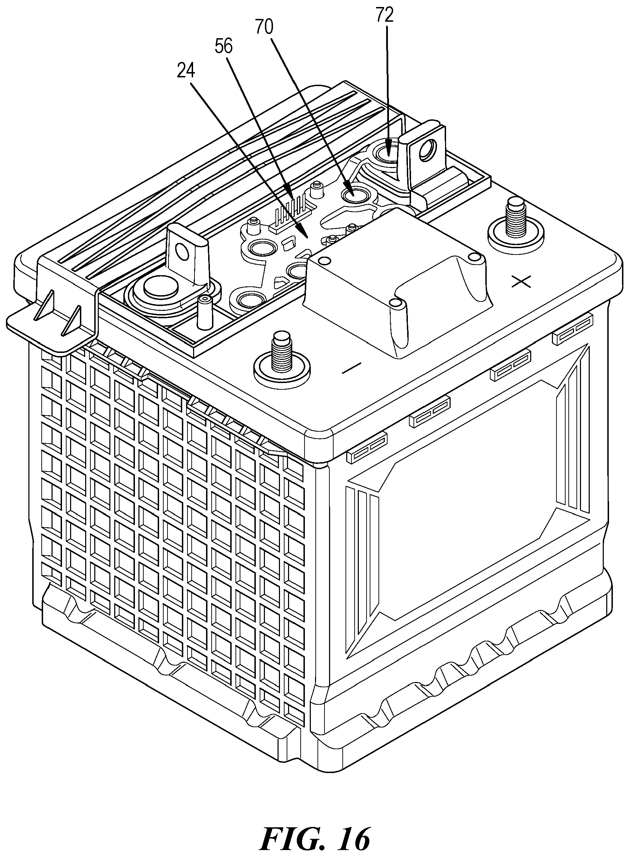

FIG. 16 shows an example lead assembly 24 and welds 70,72 according to the principles of the present disclosure. Lead assembly 24 comprises one or more leads 50 having a first end 52 (as shown in FIGS. 12-15) and a second end 56 connected to the first end 52. Any one of first end 52 (and/or post connector 54) is arranged to be physically and/or electrically coupled to one of welds 40, 42 (comprising post 18 and/or bushing 22), shown in one or another of FIGS. 7-11. A second weld 70, 72 may be performed to weld the first end 52 of each lead 50 to a corresponding first weld 40, 42. Lead assembly 24 may be further coupled to first cover 20 via one or more fasteners. Lead assembly 24 may be connected to BMS 26 (e.g., via the second end 56 such as a BMS connector), where the BMS 26 is configured to measure at least one parameter of the battery 10 such as voltage of the battery cells 14 via posts 18, bushings 22, the lead assembly 24, welds 40, 42, 70, 72, first end 52, post connectors 54, second end 56, etc. Any one of welds 70, 72 may be referred to as second welds.

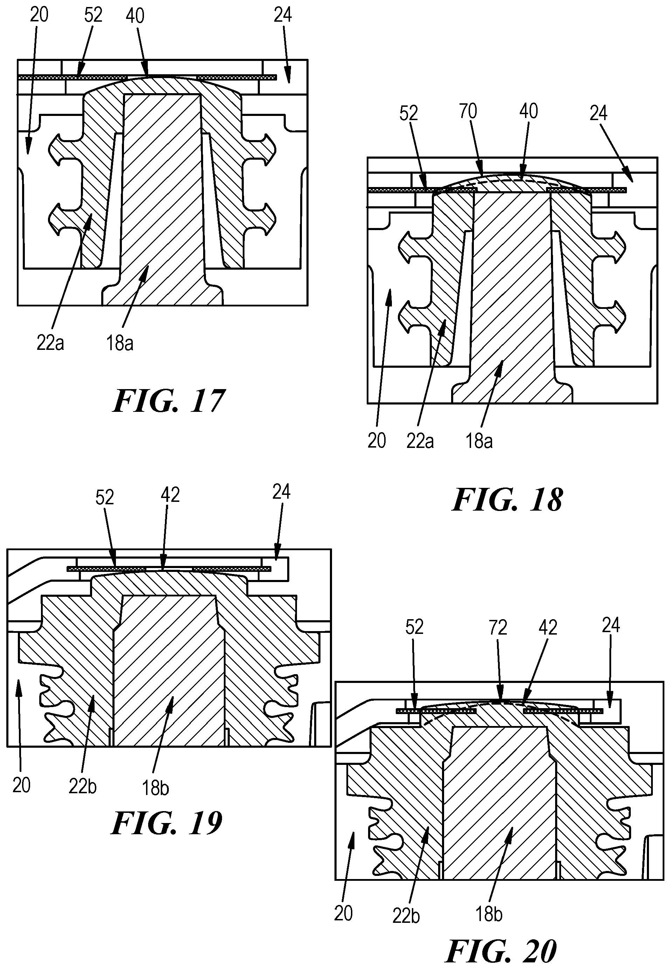

FIGS. 17-20 shows examples of other welds (e.g., second welds) according to the principles of the present disclosure. More specifically, FIG. 17 shows a weld 40 including post 18 and bushing 22, where post 18 is welded to the bushing 22. Any of the weld 40, post 18, and bushing 22 may be coupled to first cover 20. First end 52 of lead assembly 24 is positioned on weld 40 (e.g., in preparation for forming second weld 70). FIG. 18 shows a weld 70 which includes weld 40 (shown in dashed line) and the first end 52 of the lead 50. At least a portion of the weld 40 is distributed around and over the first end 52 of the lead 50 to electrically couple first end 52 of the lead 50 to the post 18 and bushing 22. In some embodiments, when first end 52 is coupled (e.g., welded) to weld 40, weld 70 is formed. FIG. 19 shows a weld 42 including post 18 and bushing 22, where post 18 is welded to the bushing 22. Any of the weld 42, post 18, and bushing 22 may be coupled to first cover 20. First end 52 of lead assembly 24 is positioned on weld 42 (e.g., in preparation for forming second weld 72). FIG. 20 shows a weld 72 which includes weld 42 (shown in dashed line) and the first end 52 of another lead 50. At least a portion of the weld 40 is distributed around and over the first end 52 of the lead 50 to electrically couple first end 52 of the lead 50 to the post 18 and bushing 22. In some embodiments, when first end 52 is coupled (e.g., welded) to weld 42, weld 72 is formed.

In a nonlimiting example, first end 52 is first placed on top of and in contact with weld 40. Then, weld 70 is formed, by redistributing at least some material (e.g., of weld 40) around and over a corresponding first end 52. Further, when first end 52 is coupled (e.g., welded) to weld 42, weld 72 is formed. In another nonlimiting example, first end 52 is first placed on top and in contact with weld 42. Then, weld 72 is formed, by redistributing at least some material (e.g., of weld 42) around and over firs end 52. The welds 70, 72 may physically and/or electrically couple first end 52 to a corresponding battery cell 14 such as via post 18 and bushing 22. In some embodiments, the connection of the first end 52 to welds 40, 42, 70, 72 may be referred to as a sensing connection or a lead assembly connection or lead connection, any of which may be associated with sensing or measuring a battery parameter.

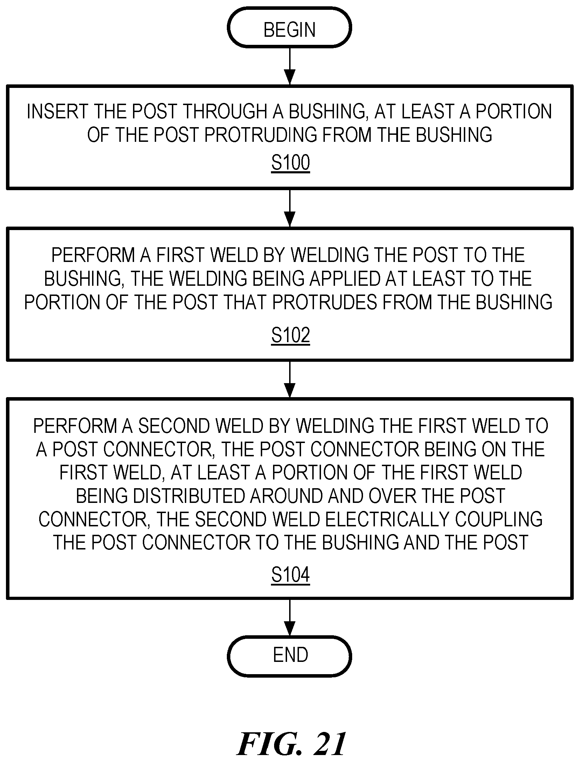

FIG. 21 shows a flowchart of an example lead connection process (i.e., method) according to the principles of the present disclosure. The method is for coupling a post connector 54 of a lead assembly 24. The method comprises inserting (Block S100) the post 18 through a bushing 22, where at least a portion of the post 18 protrudes from the bushing 22 and performing (Block S102) a first weld by welding the post 18 to the bushing 22. The welding is applied at least to the portion of the post 18 that protrudes from the bushing 22. Further, the method includes performing (Block S104) a second weld by welding the first weld to a post connector 54. The post connector 54 is on the first weld, and at least a portion of the first weld is distributed around and over the post connector 54. The second weld electrically couples the post connector 54 to the bushing 22 and the post 18.

In some embodiments, a method for connecting leads (e.g., voltage sensing leads) of lead assembly 24 to a first weld. Each lead may comprise a post connector 54 couplable to a post 18 and/or bushing 22 and/or the fist weld. In some embodiments, the first weld may be a lead (Pb) button burn created using tungsten inert gas (TIG) welding. In some other embodiments, the first weld is made of a smaller diameter than a diameter of a second weld. In an embodiment, the method comprises performing the second weld, where the post connector 54 is added around the first weld. Performing the second weld may include redistributing the lead (Pb) material around and over post connector 54.

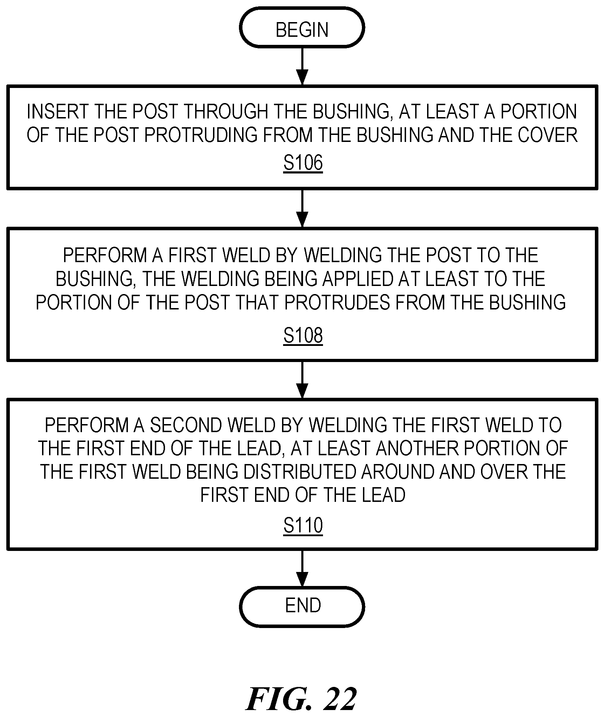

FIG. 22 shows a flowchart of another example lead connection process (i.e., method). The method is implemented for coupling a first end 52 of a lead 50 to a post 18 and a bushing 22 of a battery 10 is described. The battery 10 includes a cover 20. The bushing 22 is coupled to the cover 20. The method includes inserting (Block S106) the post 18 through the bushing 22, where at least a portion of the post 18 protrudes from the bushing 22 and the cover 20, and performing (Block S108) a first weld 40, 42 by welding the post 18 to the bushing 22. The welding is applied at least to the portion of the post 18 that protrudes from the bushing 22. The method also includes performing (Block S110) a second weld 70 by welding the first weld 40, 42 to the first end 52 of the lead 50. At least another portion of the first weld 40, 42 is distributed around and over the first end 52 of the lead 50.

In some embodiments, the performing the first weld 40, 42 includes forming a weld button that extends away from the cover 20.

In some other embodiments, the weld button includes a first portion and a second portion contiguous to the first portion. The second portion is a curved structure.

In some embodiments, the method further includes positioning the first end 52 of the lead 50 between the first portion and the second portion and coupling the first end 52 to the post 18 and the bushing 22.

In some other embodiments, the first weld 40, 42 has a third portion that covers the post 18.

In some embodiments, the method further includes integrating the first weld 40, 42 and the second weld 70 into a single unitary construction.

In some other embodiments, the first end 52 of the lead 50 is a ring and is coupled to a post connector 54.

In some embodiments, the battery 10 further includes a battery management system (BMS) 26 configurable to measure a battery parameter via the first end of the lead 50, the first weld 40, 42, and the second weld 70. The lead 50 further includes a second end opposite to the first end, and the method further includes coupling the second end of the lead 50 to the BMS 26.

The disclosure provided herein advantageously provides an arrangement for providing individual posts, e.g., posts 18, to individual battery cells 14 within a battery 10, to facilitate the ability to monitor each individual battery cell 14 of the battery 10, such as by coupling a lead frame to the posts 18 to allow electrical connectivity from each battery cell 14 (via corresponding posts 18), to a battery management system (BMS) 26. Further, the embodiments of the present disclosure are beneficial at least because a heat sink created by or damage to the first weld made by conventional welding is avoided.

It will be appreciated by persons skilled in the art that the present embodiments may be not limited to what may have been particularly shown and described. In addition, unless mention was made above to the contrary, it should be noted that all of the accompanying drawings may be not to scale. A variety of modifications and variations may be possible in light of the above teachings and following claims.

## Claims

1. A lead connection for coupling a first end (52) of a lead (50) to a post (18) and a bushing (22) of a battery (10), the lead connection comprising:
- a first weld (40, 42) comprising the bushing (22) and the post (18) welded to the bushing (22); and
- a second weld (70, 72) comprising the first weld (40, 42) and the first end (52) of the lead (50), at least a portion of the first weld (40, 42) being distributed around and over the first end (52) of the lead (50) to electrically couple first end (52) of the lead (50) to the bushing (22) and the post (18).

2. The lead connection of Claim 1,
wherein the first weld (40, 42) is a weld button that extends from the post (18).

3. The lead connection of Claim 2,
wherein the weld button comprises a first portion and a second portion contiguous to the first portion, the second portion being a curved structure.

4. The lead connection of Claim 3,
wherein the first end (52) of the lead (50) is positioned between the first portion and the second portion and is physically coupled to the post (18).

5. The lead connection of any one of Claims 1-4,
wherein the first weld (40, 42) has a third portion that covers and is in physical contact with the post (18); and/or
wherein the first weld (40, 42) and second weld (70, 72) are integrated into a unitary construction; and/or
wherein the first end (52) of the lead (50) is a ring and is coupled to a post connector (54); and/or
wherein the first weld (40, 42) and the second weld (70, 72) are electrically connectable to a battery cell (14) via the post (18), and the lead (50) is connectable to a battery management system, BMS, (26) configurable to measure a battery parameter via the lead connection.

6. A battery (10), the battery (10) comprising:
- a case (12) housing a plurality of battery cells (14);
- a plurality of posts (18), each post (18) of the plurality of posts (18) being electrically coupled to at least one battery cell (14) of the plurality of battery cells (14);
- a cover (20) sealed to the case (12) and comprising a plurality of bushings (22) coupled to the cover (20), each post (18) of the plurality of posts (18) being inserted through a corresponding bushing (22); and
- a plurality of leads (50) comprising a plurality of lead connections, each lead (50) comprising a first end (52) and a second end opposite the first end (52), each lead connection of the plurality of lead connections being a lead connection according to one of Claims 1 to 5.

7. The battery (10) of Claim 6,
wherein the cover (20) sealed to the case (12) defines an internal case space housing the plurality of battery cells (14), each lead connection being external to the internal case space; and/or wherein the battery (10) further includes:
- a battery management system, BMS, (26) configured to measure a battery parameter via each lead connection of the plurality of lead connections, the BMS (26) being electrically coupled to the second end of each lead (50).

8. The battery (10) of Claim 6 or 7,
wherein the first weld (40, 42) is a weld button that extends away from the cover (20).

9. A method for coupling a first end (52) of a lead (50) to a post (18) and a bushing (22) of a battery (10), the battery (10) comprising a cover (20), the bushing (22) being coupled to the cover (20), the method comprising:
- inserting (S106) the post (18) through the bushing (22), at least a portion of the post (18) protruding from the bushing (22) and the cover (20);
- performing (S108) a first weld (40, 42) by welding the post (18) to the bushing (22), the welding being applied at least to the portion of the post (18) that protrudes from the bushing (22); and
- performing (SI 10) a second weld (70, 72) by welding the first weld (40, 42) to the first end (52) of the lead (50), at least another portion of the first weld (40, 42) being distributed around and over the first end (52) of the lead (50).

10. The method of Claim 9, wherein the performing the first weld (40, 42) includes:
- forming a weld button that extends away from the cover (20).

11. The method of Claim 10,
wherein the weld button comprises a first portion and a second portion contiguous to the first portion, the second portion being a curved structure.

12. The method of Claim 11, wherein the method further includes:
- positioning the first end (52) of the lead (50) between the first portion and the second portion; and
- coupling the first end (52) to the post (18) and the bushing (22).

13. The method of any one of Claims 9-12,
wherein the first weld (40, 42) has a third portion that covers the post (18).

14. The method of any one of Claims 9-13,
wherein the method further includes:
- integrating the first weld (40, 42) and the second weld (70, 72) into a single unitary construction.

15. The method of any one of Claims 9-14,
wherein the first end (52) of the lead (50) is a ring and is coupled to a post connector (54); and/or
wherein the battery (10) further includes a battery management system, BMS, (26) configurable to measure a battery parameter via the first end (52) of the lead (50), the first weld (40, 42), and the second weld (70, 72), the lead (50) further includes a second end opposite to the first end (52), and the method further includes:
- coupling the second end of the lead (50) to the BMS (26).

## Patentansprüche

1. Leitungsverbindung zum Koppeln eines ersten Endes (52) einer Leitung (50) mit einem Pol (18) und einer Buchse (22) einer Batterie (10), wobei die Leitungsverbindung Folgendes umfasst:
- eine erste Schweißverbindung (40, 42), die die Buchse (22) und den mit der Buchse (22) verschweißten Pol (18) umfasst; und
- eine zweite Schweißverbindung (70, 72), die die erste Schweißverbindung (40, 42) und das erste Ende (52) der Leitung (50) umfasst, wobei mindestens ein Teil der ersten Schweißverbindung (40, 42) um und über das erste Ende (52) der Leitung (50) verteilt ist, um das erste Ende (52) der Leitung (50) elektrisch mit der Buchse (22) und dem Pol (18) zu koppeln.

2. Leitungsverbindung nach Anspruch 1,
wobei die erste Schweißverbindung (40, 42) ein Schweißknopf ist, der sich von dem Pol (18) erstreckt.

3. Leitungsverbindung nach Anspruch 2,
wobei der Schweißknopf einen ersten Abschnitt und einen zweiten Abschnitt angrenzend an den ersten Abschnitt umfasst, wobei der zweite Abschnitt eine gekrümmte Struktur ist.

4. Leitungsverbindung nach Anspruch 3,
wobei das erste Ende (52) der Leitung (50) zwischen dem ersten Abschnitt und dem zweiten Abschnitt positioniert ist und physisch mit dem Pol (18) gekoppelt ist.

5. Leitungsverbindung nach einem der Ansprüche 1-4,
wobei die erste Schweißverbindung (40, 42) einen dritten Abschnitt aufweist, der den Pol (18) bedeckt und sich in physischem Kontakt mit diesem befindet; und/oder
wobei die erste Schweißverbindung (40, 42) und die zweite Schweißverbindung (70, 72) in eine einheitliche Konstruktion integriert sind; und/oder wobei das erste Ende (52) der Leitung (50) ein Ring ist und mit einem Polverbinder (54) gekoppelt ist; und/oder
wobei die erste Schweißverbindung (40, 42) und die zweite Schweißverbindung (70, 72) über den Pol (18) elektrisch mit einer Batteriezelle (14) verbindbar sind und die Leitung (50) mit einem Batterieverwaltungssystem, BMS, (26) verbindbar ist, das dazu auslegbar ist, einen Batterieparameter über die Leitungsverbindung zu messen.

6. Batterie (10), wobei die Batterie (10) Folgendes umfasst:
- ein Gehäuse (12), das mehrere Batteriezellen (14) aufnimmt;
- mehrere Pole (18), wobei jeder Pol (18) der mehreren Pole (18) elektrisch mit mindestens einer Batteriezelle (14) der mehreren Batteriezellen (14) gekoppelt ist;
- eine Abdeckung (20), die mit dem Gehäuse (12) abgedichtet ist und mehrere Buchsen (22) umfasst, die mit der Abdeckung (20) gekoppelt sind, wobei jeder Pol (18) der mehreren Pole (18) durch eine entsprechende Buchse (22) eingesetzt wird; und
- mehrere Leitungen (50), die mehrere Leitungsverbindungen umfassen, wobei jede Leitung (50) ein erstes Ende (52) und ein zweites Ende gegenüber dem ersten Ende (52) umfasst, wobei jede Leitungsverbindung der mehreren Leitungsverbindungen eine Leitungsverbindung nach einem der Ansprüche 1 bis 5 ist.

7. Batterie (10) nach Anspruch 6,
wobei die Abdeckung (20), die mit dem Gehäuse (12) abgedichtet ist, einen inneren Gehäuseraum definiert, der die mehreren Batteriezellen (14) aufnimmt, wobei jede Leitungsverbindung außerhalb des inneren Gehäuseraums liegt; und/oder
wobei die Batterie (10) ferner Folgendes umfasst:
- ein Batterieverwaltungssystem, BMS, (26), das dazu ausgelegt ist, einen Batterieparameter über jede Leitungsverbindung der mehreren Leitungsverbindungen zu messen, wobei das BMS (26) elektrisch mit dem zweiten Ende jeder Leitung (50) gekoppelt ist.

8. Batterie (10) nach Anspruch 6 oder 7,
wobei die erste Schweißverbindung (40, 42) ein Schweißknopf ist, der sich von der Abdeckung (20) weg erstreckt.

9. Verfahren zum Koppeln eines ersten Endes (52) einer Leitung (50) mit einem Pol (18) und einer Buchse (22) einer Batterie (10), wobei die Batterie (10) eine Abdeckung (20) umfasst, wobei die Buchse (22) mit der Abdeckung (20) gekoppelt ist, wobei das Verfahren Folgendes umfasst:
- Einsetzen (S106) des Pols (18) durch die Buchse (22), wobei mindestens ein Teil des Pols (18) aus der Buchse (22) und der Abdeckung (20) hervorsteht;
- Durchführen (S108) einer ersten Schweißverbindung (40, 42) durch Schweißen des Pols (18) an die Buchse (22), wobei das Schweißen mindestens auf den Abschnitt des Pols (18) angewendet wird, der aus der Buchse (22) hervorsteht; und
- Durchführen (SI 10) einer zweiten Schweißverbindung (70, 72) durch Schweißen der ersten Schweißverbindung (40, 42) an das erste Ende (52) der Leitung (50), wobei mindestens ein anderer Abschnitt der ersten Schweißverbindung (40, 42) um und über das erste Ende (52) der Leitung (50) verteilt ist.

10. Verfahren nach Anspruch 9,
wobei das Durchführen der ersten Schweißverbindung (40, 42) Folgendes umfasst:
- Bilden eines Schweißknopfes, der sich von der Abdeckung (20) weg erstreckt.

11. Verfahren nach Anspruch 10,
wobei der Schweißknopf einen ersten Abschnitt und einen zweiten Abschnitt angrenzend an den ersten Abschnitt umfasst, wobei der zweite Abschnitt eine gekrümmte Struktur ist.

12. Verfahren nach Anspruch 11,
wobei das Verfahren ferner Folgendes umfasst:
- Positionieren des ersten Endes (52) der Leitung (50) zwischen dem ersten Abschnitt und dem zweiten Abschnitt; und
- Verbinden des ersten Endes (52) mit dem Pol (18) und der Buchse (22).

13. Verfahren nach einem der Ansprüche 9-12,
wobei die erste Schweißverbindung (40, 42) einen dritten Abschnitt aufweist, der den Pol (18) bedeckt.

14. Verfahren nach einem der Ansprüche 9-13,
wobei das Verfahren ferner Folgendes umfasst:
- Integrieren der ersten Schweißverbindung (40, 42) und der zweiten Schweißverbindung (70, 72) in einer einzigen einheitlichen Konstruktion.

15. Verfahren nach einem der Ansprüche 9-14,
wobei das erste Ende (52) der Leitung (50) ein Ring ist und mit einem Polverbinder (54) gekoppelt ist; und/oder
wobei die Batterie (10) ferner ein Batterieverwaltungssystem, BMS, (26) umfasst, das dazu auslegbar ist, einen Batterieparameter über das erste Ende (52) der Leitung (50), die erste Schweißverbindung (40, 42) und die zweite Schweißverbindung (70, 72) zu messen, wobei die Leitung (50) ferner ein zweites Ende gegenüber dem ersten Ende (52) umfasst und das Verfahren ferner Folgendes umfasst:
- Koppeln des zweiten Endes der Leitung (50) mit dem BMS (26).

## Revendications

1. Connexion de conducteur pour coupler une première extrémité (52) d'un conducteur (50) à une borne (18) et à une traversée (22) d'une batterie (10), la connexion de conducteur comprenant :
- une première soudure (40, 42) comprenant la traversée (22) et la borne (18) soudée à la traversée (22) ; et
- une seconde soudure (70, 72) comprenant la première soudure (40, 42) et la première extrémité (52) du conducteur (50), au moins une partie de la première soudure (40, 42) étant distribuée autour de la première extrémité (52) du conducteur (50), et par-dessus celle-ci, pour coupler électriquement la première extrémité (52) du conducteur (50) à la traversée (22) et à la borne (18).

2. Connexion de conducteur de la revendication 1,
dans laquelle la première soudure (40, 42) est un bouton de soudure qui s'étend depuis la borne (18).

3. Connexion de conducteur de la revendication 2,
dans laquelle le bouton de soudure comprend une première partie et une deuxième partie contiguë à la première partie, la deuxième partie étant une structure courbée.

4. Connexion de conducteur de la revendication 3,
dans laquelle la première extrémité (52) du conducteur (50) est positionnée entre la première partie et la deuxième partie et est couplée physiquement à la borne (18).

5. Connexion de conducteur de l'une quelconque des revendications 1 à 4, dans laquelle la première soudure (40, 42) a une troisième partie qui couvre et est en contact physique avec la borne (18) ; et/ou dans laquelle la première soudure (40, 42) et la seconde soudure (70, 72) sont intégrées en une construction unitaire ; et/ou dans laquelle la première extrémité (52) du conducteur (50) est une bague et est couplée à un connecteur de borne (54) ; et/ou dans laquelle la première soudure (40, 42) et la seconde soudure (70, 72) sont connectables électriquement à une cellule de batterie (14) par l'intermédiaire de la borne (18), et le conducteur (50) est connectable à un système de gestion de batterie, Battery Management System BMS, (26) configurable pour mesurer un paramètre de batterie par l'intermédiaire de la connexion de conducteur.

6. Batterie (10), la batterie (10) comprenant :
- un boîtier (12) logeant une pluralité de cellules de batterie (14) ;
- une pluralité de bornes (18), chaque borne (18) de la pluralité de bornes (18) étant couplée électriquement à au moins une cellule de batterie (14) de la pluralité de cellules de batterie (14) ;
- un couvercle (20) scellé sur le boîtier (12) et comprenant une pluralité de traversées (22) couplées au couvercle (20), chaque borne (18) de la pluralité de bornes (18) étant insérée à travers une traversée correspondante (22) ; et
- une pluralité de conducteurs (50) comprenant une pluralité de connexions de conducteur, chaque conducteur (50) comprenant une première extrémité (52) et une seconde extrémité opposée à la première extrémité (52), chaque connexion de conducteur de la pluralité de connexions de conducteur étant une connexion de conducteur selon l'une des revendications 1 à 5.

7. Batterie (10) de la revendication 6,
dans laquelle le couvercle (20) scellé sur le boîtier (12) définit un espace de boîtier interne logeant la pluralité de cellules de batterie (14), chaque connexion de conducteur étant externe à l'espace de boîtier interne ; et/ou dans laquelle la batterie (10) inclut en outre :
- un système de gestion de batterie, Battery Management System BMS, (26) configuré pour mesurer un paramètre de batterie par l'intermédiaire de chaque connexion de conducteur de la pluralité de connexions de conducteur, le BMS (26) étant couplé électriquement à la seconde extrémité de chaque conducteur (50).

8. Batterie (10) de la revendication 6 ou 7,
dans laquelle la première soudure (40, 42) est un bouton de soudure qui s'étend en éloignement du couvercle (20).

9. Procédé pour coupler une première extrémité (52) d'un conducteur (50) à une borne (18) et une traversée (22) d'une batterie (10), la batterie (10) comprenant un couvercle (20), la traversée (22) étant couplée au couvercle (20), le procédé comprenant :
- l'insertion (S106) de la borne (18) à travers la traversée (22), au moins une partie de la borne (18) faisant saillie à partir de la traversée (22) et du couvercle (20) ;
- la réalisation (S108) d'une première soudure (40, 42) en soudant la borne (18) à la traversée (22), le soudage étant appliqué au moins sur la partie de la borne (18) qui fait saillie à partir de la traversée (22) ; et
- la réalisation (SI 10) d'une seconde soudure (70, 72) en soudant la première soudure (40, 42) à la première extrémité (52) du conducteur (50), au moins une autre partie de la première soudure (40, 42) étant distribuée autour de la première extrémité (52) du conducteur (50), et par-dessus celle-ci.

10. Procédé de la revendication 9,
dans lequel la réalisation de la première soudure (40, 42) inclut :
- la formation d'un bouton de soudure qui s'étend en éloignement du couvercle (20).

11. Procédé de la revendication 10,
dans laquelle le bouton de soudure comprend une première partie et une deuxième partie contiguë à la première partie, la deuxième partie étant une structure courbée.

12. Procédé de la revendication 11,
dans lequel le procédé inclut en outre :
- le positionnement de la première extrémité (52) du conducteur (50) entre la première partie et la deuxième partie ; et
- le couplage de la première extrémité (52) à la borne (18) et à la traversée (22).

13. Procédé de l'une quelconque des revendications 9 à 12,
dans lequel la première soudure (40, 42) a une troisième partie qui couvre la borne (18).

14. Procédé de l'une quelconque des revendications 9 à 13,
dans lequel le procédé inclut en outre :
- l'intégration de la première soudure (40, 42) et la seconde soudure (70, 72) en une seule construction unitaire.

15. Procédé de l'une quelconque des revendications 9 à 14,
dans laquelle la première extrémité (52) du conducteur (50) est une bague et est couplée à un connecteur de borne (54) ; et/ou
dans lequel la batterie (10) inclut en outre un système de gestion de batterie, Battery Management System BMS, (26) configurable pour mesurer un paramètre de batterie par l'intermédiaire de la première extrémité (52) du conducteur (50), de la première soudure (40, 42), et de la seconde soudure (70, 72), le conducteur (50) inclut en outre une seconde extrémité opposée à la première extrémité (52), et le procédé inclut en outre :
- le couplage de la seconde extrémité du conducteur (50) au BMS (26).
